# EUROPÄISCHE PATENTANMELDUNG

(11) **EP 1 983 075 A1**
(43) Veröffentlichungstag der Anmeldung: **22.10.2008**
(21) Anmeldenummer: 07008141.9
(22) Anmeldetag: 20.04.2007
(51) Int. Cl.: C23G 5/00, B23K 1/20, C04B 41/50, C23C 18/06, C23C 18/12, F01D 25/00, B08B 7/00

(54) **Polymerbasierte Keramikbeschichtungen zum Schutz von Oberflächen vor Fluoridionen bei einem Reinigungsprozess**

(71) Anmelder: SIEMENS AKTIENGESELLSCHAFT, 80333 München (DE)
(72) Erfinder: Ott, Michael Dr., 45470 Mülheim (DE); Steinbach, Jan Dr., 13353 Berlin (DE); Walter, Steffen Dr., 85667 Oberpframmern (DE)

(57) **Zusammenfassung**

Zur materialschonenden Reinigung von teilweise korrodierten bzw. oxidierten Oberflächen (9) mit Fluoridionen werden die nicht korrodierten bzw. nicht oxidierten Teile der Oberfläche (8) mit polymerbasierten Keramiken (Polymer Derived Ceramics) (4) vor Beginn der Reinigung beschichtet.

## Beschreibung

Die vorliegende Erfindung betrifft die materialschonende Reinigung von teilweise korrodierten bzw. oxidierten Oberflächen mit Fluoridionen. Daneben betrifft die Erfindung eine Verwendung von polymerbasierten Keramikbeschichtungen.

Die Komponenten eines Heißgaskanals, insbesondere die Turbinenschaufeln einer Gasturbine, sind während ihres Betriebes korrosiven Heißgasen und extremen mechanischen Belastungen ausgesetzt. Daher treten regelmäßig Korrosionen, Oxidationen und Risse an den Oberflächen dieser Komponenten auf. Vor einer Reparatur der Risse durch Löten oder Schweißen müssen die betroffenen Oberflächen und die Risse von Oxid- bzw. Korrosionsrückständen gereinigt werden. Diese Reinigung erfolgt typischerweise mit Hilfe von Fluoridionen. Allerdings werden dadurch auch die nicht oxidierten Teile der Oberflächen von den aggressiven Fluoridionen angegriffen. Die hierdurch verursachte Abnutzung führt insbesondere im Fall von Superlegierungen auf Nickelbasis zu einer erheblichen Verschlechterung der Materialeigenschaften der betroffenen Komponenten infolge der Fluoridionenreinigung. Die Abnutzung der Komponenten durch die Fluoridionen wirkt sich daher nachteilig auf die Betriebsdauer derselben aus.

Aufgrund der drohenden Materialverschlechterung kann die Wiederaufarbeitung rissiger Komponenten unter vorheriger Verwendung der Fluoridionenreinigung insbesondere nicht an rotierenden Komponenten durchgeführt werden, die im Betrieb einer Gasturbine besonders hohen mechanischen Belastungen ausgesetzt sind und daher hohen Anforderungen an die Festigkeit genügen müssen. Eine Verschlechterung der Materialeigenschaften der Legierung aufgrund der Reinigung führt daher in der Regel dazu, dass die entsprechende Turbinenschaufel vollständig ersetzt werden muss. Die daraus resultierende geringere Betriebsdauer rotierender Komponenten stellt einen erheblichen wirtschaftlichen Nachteil dar.

Zur Unterdrückung von Oxidation und Korrosion werden Turbinenschaufeln daher mit einer kontinuierlichen oxidationsfesten Wärmedämmbeschichtung überzogen, um eine Wiederaufarbeitung hinaus zu zögern. Das verwendete Material ist infolge von mechanischen Spannungen jedoch unvermeidbar einer Mikrorissbildung unterworfen, sodass dadurch Oxidationen lediglich verzögert, nicht aber vermieden werden.

Um den Oxidationsschutz von Bauteilen aus Verbundwerkstoff zu verbessern werden diese in EP 0 550 305 B1 mit einem Gemisch aus einem feuerfesten Keramikmaterial und einer heilenden Verbindung beschichtet. Die Beschichtung erfolgt durch Aufbringen eines Polymerprecursors und anschließendes Transformieren des Precursors in die Keramik. Aber auch eine derartige Wärmedämmschicht würde ein Wiederaufarbeiten unter Verwendung von Fluoridionen zum Reinigen für Turbinenbauteile nicht überflüssig machen.

In US 6,645,926 B2 wird ein Maskierungssystem zur Verwendung bei einer Fluoridreinigung beschrieben. Dabei wird auf die zu schützenden Teile der Oberfläche zunächst eine mehrlagige Trennkomponente aufgetragen. Auf die Trennkomponente wird dann eine chromhaltige Maskierungsschicht aufgebracht. Hierbei dient die Maskierungsschicht zum Schutz der Oberfläche vor dem Einfluss der Fluoridionen. Die Trennkomponente soll ein leichtes Entfernen der Maskierungsschicht nach der Fluoridionenreinigung ermöglichen.

Die Trennkomponente enthält Kolloid-Kieselerde, entionisiertes Wasser, körnige Schmelztonerde und Aluminiumoxidpulver. Die Maskierungsschicht enthält Chrompulver, gemischt mit einem Bindemittel, einem Benetzungsmittel, einem Dickungsmittel und Wasser.

Aufgabe der vorliegenden Erfindung ist es, ein alternatives Verfahren, welches die durch Fluoridionen verursachte Abnutzung von nicht oxidierten Teilen der Oberfläche zu vermeiden hilft, zur Verfügung zu stellen.

Es ist eine weitere Aufgabe der Erfindung, eine vorteilhafte Verwendung von polymerbasiertem Keramikmaterial zur Verfügung zu stellen.

Zur Lösung der genannten Aufgabe stellt die vorliegende Erfindung ein Verfahren zur materialschonenden Fluoridionenreinigung von teilweise korrodierten bzw. oxidierten Oberflächen nach Anspruch 1 sowie die Verwendung von polymerbasiertem Keramikmaterial nach Anspruch 15 zur Verfügung. Die abhängigen Ansprüche enthalten vorteilhafte Ausgestaltungen der Erfindung.

Im erfindungsgemäßen Verfahren zur materialschonenden Reinigung von teilweise korrodierten bzw. oxidierten Oberflächen mit Fluoridionen wird ein Schutz der nicht korrodierten bzw. oxidierten Teile der mit Fluoridionen zu reinigenden Oberfläche dadurch erreicht, dass die nicht korrodierten bzw. oxidierten Teile der Oberfläche vor Beginn der Reinigung mit einer polymerbasierten Keramik beschichtet werden. Polymerbasierte Keramiken (Polymer Derived Ceramics) stellen eine Materialklasse dar, die bei Raumtemperatur als gewöhnliche Polymere verwendet werden können(oder ggf. als Monomere, die vor der Keramisierung einer Polymerisation unterzogen werden), insbesondere zur Oberflächenbeschichtung. Eine weitere typische Anwendung stellt die Benutzung als amorphe Hochtemperaturfasern dar, da diese Materialien bis hin zu 1500°C amorph bleiben. Die polymerbasierte Keramik stellt einen hochwirksamen Schutz gegen den Angriff von Fluoridionen dar. In Form eines Polymerprecursors kann sie zudem einfach und definiert auf die zu schützenden Oberflächenbereiche aufgebracht werden.

Das Beschichten der zu schützenden Oberflächen kann dadurch erfolgen, dass ein monomerer oder polymerer Precursor der polymerbasierten Keramik auf die Oberfläche aufgebracht wird und anschließend eine Keramisierung des Precursors erfolgt. Im Rahmen der Fluoridionenreinigung sind vor allem siliziumhaltige Precursor und insbesondere solche, die SiC und Si₃N₄ bilden, geeignet.

Der Precursor kann Stickstoff enthalten. Sofern der Precursor keinen Stickstoff enthält, kann die spätere Keramisierung durch Pyrolyse in Stickstoff herbeigeführt werden.

Insbesondere sind folgende Precursor zum Durchführen der Beschichtung geeignet: Polysilan [amorphe Phase: Si-C-(O), kristalline Phase: SiC und Si₃N₄ (Pyrolyse in N₂), C], Polycarbosilan [amorphe Phase: Si-C-(O), kristalline Phase: SiC und Si₃N₄ (Pyrolyse in N₂), C], Polysilazan [amorphe Phase: Si-C-N, kristalline Phase: SiC und Si₃N₄], Polyborosilazan [amorphe Phase: Si-B-C-N, kristalline Phase: SiC und Si₃N₄] oder Polycarbosilazan [amorphe Phase: Si-C-N-(O), kristalline Phase: SiC und Si₃N_{4]}. Besonders vielversprechend ist hier die Verwendung von Polycarbosilazan mit einem geringen Sauerstoffanteil. Dieses Material bleibt bis 1100°C amorph und kristallisiert in die fluoridionenresistenten Komponenten SiC und Si₃N₄.

Vor Beginn der Fluoridionenreinigung wird der zunächst flüssige oder streichfähige Precursor auf die nicht oxidierten Teile der zu reinigenden Oberfläche aufgetragen. Dies kann insbesondere dadurch erfolgen, dass der flüssige oder streichfähige Precursor auf die zu reinigende Oberfläche gestrichen, getropft oder gesprüht wird oder dass die zu reinigende Oberfläche in den flüssigen Precursor eingetaucht wird. Danach kann insbesondere ein monomerer Precursor zunächst durch eine Wärmebehandlung vernetzt oder teilvernetzt werden. Anschließend wird durch Pyrolyse die kristallisierte keramische Schutzschicht erzeugt (Keramisierung).

Die Pyrolyse kann insbesondere in einer Stickstoffatmosphäre durchgeführt werden. Im Rahmen des Pyrolyseprozesses verbrennen die organischen Elemente und das Material kristallisiert. Danach kann die Fluoridionenreinigung durchgeführt werden, wobei einerseits die Korrosions- und Oxidrückstände der nicht beschichteten Flächen effektiv entfernt werden, andererseits aber die beschichteten Flächen nicht den aggressiven Fluoridionen ausgesetzt werden.

Nach Abschluss der Reinigung kann die polymerbasierte keramische Schutzschicht in einem alkalischen Bad oder in einem alkalischen Ultraschallbad durch zum Beispiel einen Strahlputzprozess entfernt werden.

Gemäß der Erfindung werden also polymerbasierte Keramikmaterialien zur Verwendung zum Schutz von nicht zu reinigenden Oberflächenabschnitten vor Fluoridionen bei der Reinigung von Oberflächen mit Fluoridionen zur Verfügung gestellt. Diese können sich insbesondere dadurch auszeichnen, dass das polymerbasierte Keramikmaterial ein siliziumhaltiges polymerbasiertes Keramikmaterial ist. Hierbei besteht die Möglichkeit, dass das polymerbasierte Keramikmaterial SiC und/oder Si₃N₄ bildende Precursor umfasst. Ferner kann das polymerbasierte Keramikmaterial Polysilan, Polycarbosilan, Polysilazan, Polyborosilazan oder Polycarbosilazan als Precursor umfassen.

Das hier vorgestellte Verfahren und die hier vorgeschlagene Verwendung verlängern die Betriebsdauer der betroffenen Komponenten erheblich und führen daher zu einer wesentlichen Kostenersparnis. Insbesondere können nun auch rotierende Komponenten eines Heißgaskanals ohne Verschlechterung des Ausgangsmaterials repariert werden.

Gegenüber dem in US 6,645,926 offenbarten Verfahren ist bei dem hier beschriebenen Verfahren lediglich eine Schutzschicht erforderlich. Es entfällt insbesondere das Auftragen einer mehrlagigen Trennschicht.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Fig. 1: zeigt eine Gasturbine in einem Längsteilschnitt.
- Fig. 2: zeigt eine Brennkammer einer Gasturbine.
- Fig. 3: zeigt in perspektivischer Ansicht eine Laufschaufel oder Leitschaufel einer Strömungsmaschine.
- Fig. 4: zeigt schematisch den Querschnitt durch eine Oberfläche, die einen Riss aufweist und teilweise mit Korrosionsrückständen bedeckt ist.
- Fig. 5: zeigt den Querschnitt aus Fig. 4, wobei die nicht korrodierten Teile der Oberfläche mit einer polymerbasierten Keramik beschichtet wurden.
- Fig. 6: zeigt den Querschnitt aus Fig. 4, wobei die Oberfläche mit Fluoridionen gereinigt wird.
- Fig. 7: zeigt den Querschnitt aus Fig. 4, wobei die unbeschichteten Teile der Oberfläche infolge der Fluoridionenreinigung Abnutzungserscheinungen aufweisen.
- Fig. 8: zeigt den Querschnitt aus Fig. 4 nachdem die polymerbasierten Keramikschutzschicht entfernt und der Riss repariert wurde.

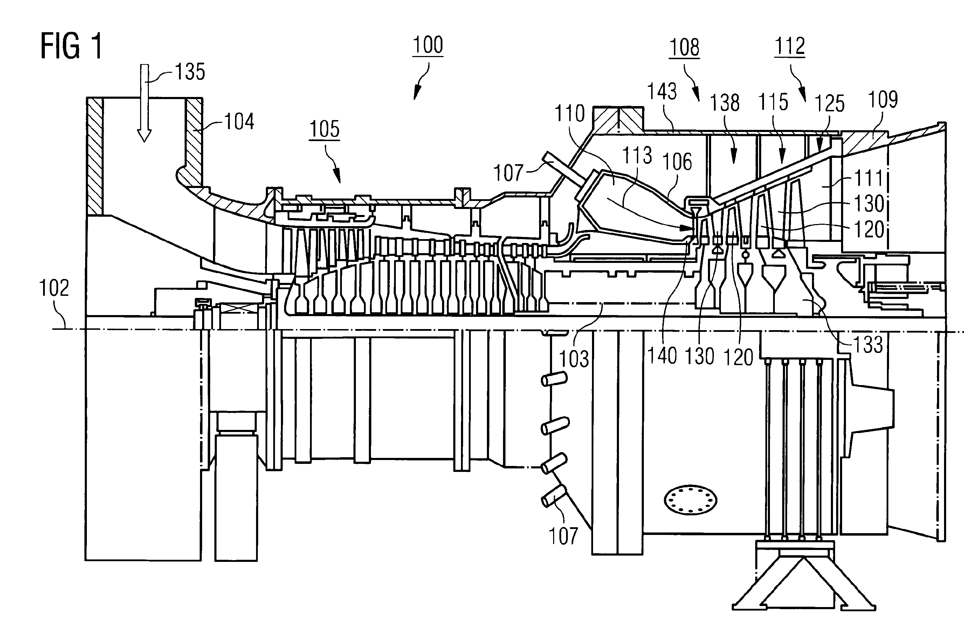

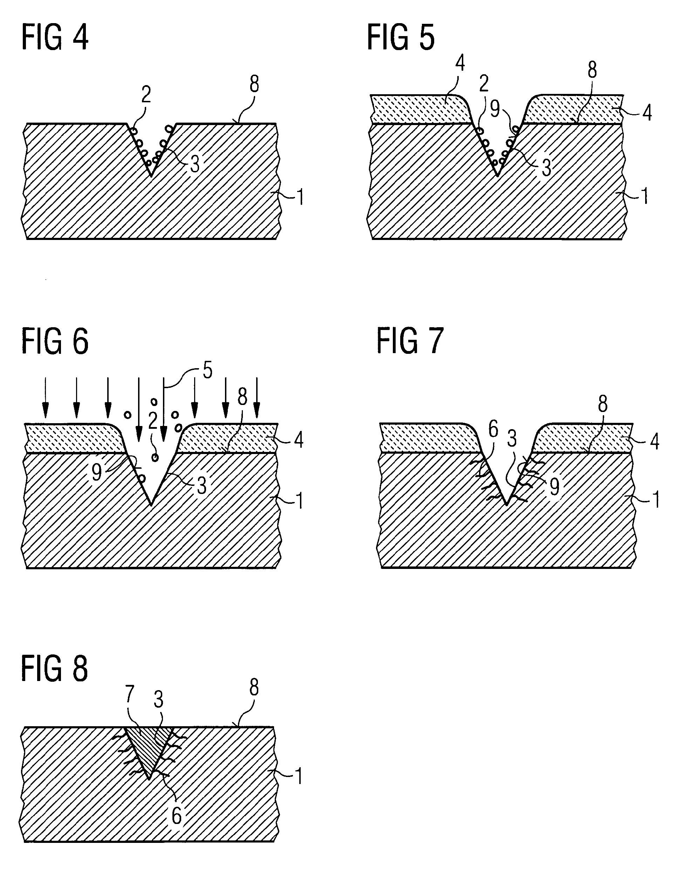

Im folgenden werden die Figuren 1-8 detailliert beschrieben und das erfindungsgemäße Verfahren zur materialschonenden Reinigung von teilweise korrodierten bzw. oxidierten Oberflächen mit Fluoridionen anhand der Figuren 4-8 näher erläutert.

Die Figur 1 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

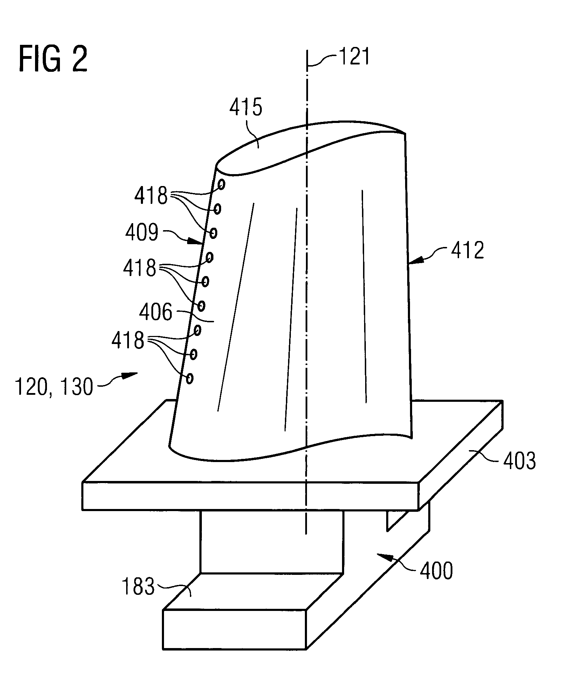

Die Figur 2 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

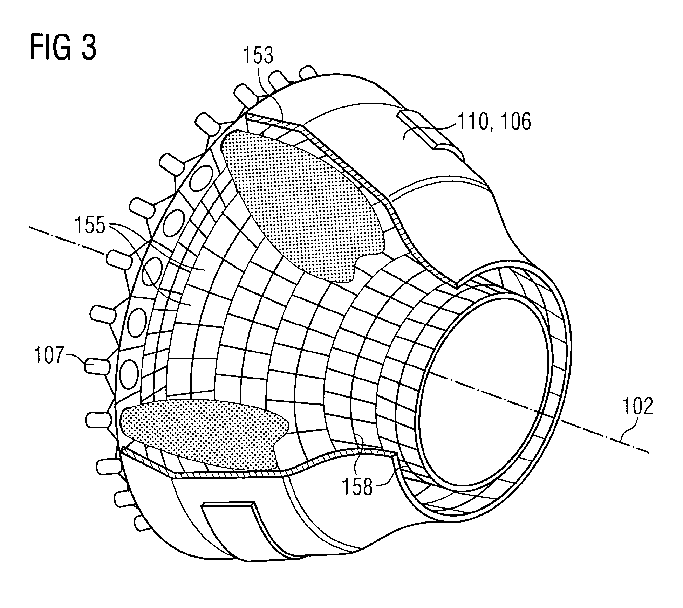

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrA1X kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Im Folgenden wird das erfindungsgemäße Verfahren zur materialschonenden Reinigung von teilweise korrodierten bzw. oxidierten Oberflächen mit Fluoridionen anhand der Figuren 4-8 näher erläutert.

Ausgangspunkt ist eine teilweise rissige und korrodierte Oberfläche 1 einer Laufschaufel in einer Gasturbine, wie sie in Figur 4 skizziert ist. Die Figur 4 zeigt stark vereinfacht und schematisch den Querschnitt durch die Wand einer Laufschaufel, wie sie in Figur 3 gezeigt wurde. Man erkennt das Basismaterial 1 der Turbinenschaufel, die Oberfläche 8 nach dem Entfernen einer ursprünglich eventuell vorhandenen Wärmedämmbeschichtung sowie einen Riss 3 mit einer Rissoberfläche 9, die Korrosions- und Oxidationsrückstände 2 aufweist.

Vor der Wiederaufarbeitung sind zunächst die Korrosions- und Oxidationsrückstände 2 zu entfernen. Zum Schutz der nicht korrodierten Bauteiloberfläche 8 wird diese mit flüssigem Polycarbosilazan (Si-C-N-(O)) als Precursor für eine Keramikbeschichtung bestrichen. Alternativ kann das Polycarbosilazan auch durch Besprühen oder durch Eintauchen des Bauteils in das flüssige Polycarbosilazan aufgebracht werden. Dabei in den Riss 3 eindringendes Polycarbosilazan kann vor der späteren Keramisierung wieder aus dem Riss 3 entfernt werden. Anschließend wird die bestrichene Oberfläche auf ca. 150 bis 250°C, insbesondere auf ca. 200°C, erwärmt, wobei sich das Polycarbosilazan vernetzt. Durch die Vernetzung härtet das zuvor flüssige Polycarbosilazan aus, wodurch sichergestellt wird, dass dieses während der nachfolgenden Prozessschritte auf der Oberfläche fixiert ist. Die Verwendung von Polycarbosilazan ist vorteilhaft, da dieses Material im vernetzten Zustand bis hin zu 1100°C amorph bleibt. Im vernetzten Zustand kann beispielsweise auch das Entfernen des Polycarbosilazans aus dem Riss erfolgen.

Nach der Vernetzung wird das Polycarbosilazan einer Pyrolyse unterzogen, während der es zu einer keramischen Schutzschicht aus SiC und Si₃N₄ kristallisiert. Die Pyrolyse erfolgt bei Temperaturen über 1100°C, insbesondere bei Temperaturen im Bereich von 1100°C bis 1500 °C und vorzugsweise bei Temperaturen um ca. 1300°C. Die auf die Bauteiloberfläche aufgebrachte keramische Schutzschicht 4 ist in Figur 5 skizziert. Die Figur 5 zeigt die Querschnittsfläche 1 aus Figur 4, wobei die Bauteiloberfläche 8 nun mit SiC und Si₃N₄ beschichtet ist.

Bei der anschließenden Reinigung der Rissoberfläche 9 mit Fluoridionen 5 werden die Korrosions- und Oxidrückstände 2 entfernt (siehe Figur 6). Die nicht korrodierte Bauteiloberfläche ist während der Reinigung durch die Keramikschutzschicht 4 geschützt.

Während die Rissoberfläche 9 beim Reinigen durch den Einfluss der Fluoridionen angegriffen wurde, reagiert die keramischen Schutzschicht aus SiC und Si₃N₄ nicht mit den Fluoridionen, wodurch die Schutzwirkung für die Bauteiloberfläche 8 gegeben ist. Dies ist in Figur 7 skizziert. Die Figur 7 zeigt die Querschnittsfläche 1 aus Figur 5 nach Beendigung der Reinigung der Rissoberfläche mit Fluoridionen. Die Rissoberfläche, die nicht mit der Keramikschutzschicht 4 bedeckt ist, weist infolge der Fluoridionenreinigung Abnutzungserscheinungen 6 auf. Dies ist jedoch nicht weiter problematisch, da der Riss anschließend einem Löt- oder Schweißprozess unterzogen wird, um ihn zu beseitigen. Die Bauteiloberfläche 8, an der keine Reparaturen nötig sind, weist hingegen aufgrund des Schutzes durch die keramische Schutzschicht 4 keine Degradierung der Materialeigenschaften auf.

Nach der Fluoridionenreinigung wird die keramische Schutzschicht 4 in einem alkalischen Ultraschallbad durch einen Strahlputzprozess entfernt. Anschließend kann beim gereinigten Bauteil der Riss 3 durch Löten oder Schweißen 7 repariert werden. Das Ergebnis ist in Figur 8 skizziert. Die Figur 8 zeigt die Querschnittsansicht aus Figur 7, nachdem die polymerbasierte Keramikschutzschicht entfernt wurde. Der Riss 3 und die durch die Fluoridionen angegriffenen Teile 6 der gereinigten Rissoberfläche wurden durch Schweißen repariert. Man sieht hier die Schweißnaht 7. Im reparierten Bauteil zeigt die gesamte Oberfläche letztendlich keine durch die Fluoridionenreinigung verursachten Abnutzungserscheinungen.

Obwohl im vorliegenden Ausführungsbeispiel Polycarbosilazan als Precursor Verwendung fand, eignen sich auch andere Precursor. Einige geeignete Precursor und die daraus resultierenden Keramiken sind in der nachfolgenden Tabelle zusammengestellt. Falls der Precursor keinen Stickstoff enthält, erfolgt die Pyrolyse in einer Stickstoffatmosphäre, falls die Bildung von Si₃N₄ erwünscht ist. Die verschiedenen Precursor können auch kombiniert als Gemisch verwendet werden.

| polymerbasierte Keramik | amorphe Phase | kristalline Phase |
|---|---|---|
| Polysilan | Si-C-(O) | SiC, Si₃N₄, (Pyrolyse in N₂), C |
| Polycarbosilan | Si-C-(O) | SiC, Si₃N₄, (Pyrolyse in N₂), C |
| Polysilazan | Si-C-N | SiC, Si₃N₄ |
| Polyborosilazan | Si-B-C-N | SiC, Si₃N₄ |
| Polycarbosilazan | Si-C-N-(O) | SiC, Si₃N₄ |

Das erfindungsgemäße Verfahren kann auch zum Reinigen von korrodierten oder oxidierten Oberflächenabschnitten Verwendung finden, die keine Risse aufweisen. Solche Oberflächenabschnitte werden im Rahmen der Wiederaufarbeitung durch Materialauftrag mittels Löt- oder Schweißverfahren wieder aufgearbeitet. In einem solchen Fall werden diejenigen Bereiche, auf denen ein solcher Materialauftrag erfolgen soll, mit Fluoridionen gereinigt, während diejenigen Bereiche, in denen ein Materialauftrag nicht erfolgen soll, erfindungsgemäß mit der polymerbasierten Keramikschutzschicht geschützt werden.

## Patentansprüche

1. Verfahren zur materialschonenden Reinigung von teilweise korrodierten bzw. oxidierten Oberflächen (9) mit Fluoridionen,
**gekennzeichnet durch**
das Beschichten der nicht korrodierten bzw. nicht oxidierten Teile (8) der Oberfläche mit einer polymerbasierten Keramik (4) vor Beginn der Reinigung.

2. Verfahren nach Anspruch 1,
**dadurch gekennzeichnet, dass**
das Beschichten erfolgt, indem ein Precursor der polymerbasierten Keramik (4) aufgebracht wird und anschließend eine Keramisierung des Precursors erfolgt.

3. Verfahren nach Anspruch 2,
**dadurch gekennzeichnet, dass**
ein siliziumhaltiger Precursor verwendet wird.

4. Verfahren nach Anspruch 3,
**dadurch gekennzeichnet, dass**
eine SiC und/oder Si₃N₄ bildende polymerbasierte Keramik verwendet wird.

5. Verfahren nach einem der Ansprüche 2-4,
**dadurch gekennzeichnet, dass**
der verwendete Precursor Stickstoff enthält.

6. Verfahren nach einem der Ansprüche 2-4,
**dadurch gekennzeichnet, dass**
der verwendete Precursor keinen Stickstoff enthält und die Keramisierung durch Pyrolyse in Stickstoff herbeigeführt wird.

7. Verfahren nach einem der Ansprüche 2-6,
**dadurch gekennzeichnet, dass**
Polysilan, Polycarbosilan, Polysilazan, Polyborosilazan oder Polycarbosilazan als Precursor verwendet wird.

8. Verfahren nach einem der Ansprüche 2-7,
**dadurch gekennzeichnet, dass**
das Beschichten des Bauteils mit dem Precursor erfolgt, indem dieser in einer flüssigen oder streichfähigen Phase auf die zu schützenden Teile der Oberfläche (8) gestrichen, getropft oder gesprüht wird.

9. Verfahren nach einem der Ansprüche 2-7,
**dadurch gekennzeichnet, dass**
die zu schützenden Teile der Oberfläche in den Precursor in seiner flüssigen Phase eingetaucht wird.

10. Verfahren nach einem der Ansprüche 2-9,
**dadurch gekennzeichnet, dass**
der auf die zu schützenden Teile der Oberfläche aufgebrachte Precursor durch eine Wärmebehandlung vernetzt oder teilvernetzt wird.

11. Verfahren nach einem der Ansprüche 6-10,
**dadurch gekennzeichnet, dass**
eine Pyrolyse zur Keramisierung angewendet wird.

12. Verfahren nach Anspruch 11,
**dadurch gekennzeichnet, dass**
die Pyrolyse in einer Stickstoffatmosphäre durchgeführt wird.

13. Verfahren nach einem der Ansprüche 1-12,
**dadurch gekennzeichnet, dass**
nach Abschluss der Reinigung mit Fluoridionen (5) die polymerbasierte keramische Schutzschicht (4) in einem alkalischen Bad entfernt wird.

14. Verfahren nach Anspruch 13,
**dadurch gekennzeichnet, dass**
nach Abschluss der Reinigung mit Fluoridionen (5) die polymerbasierte keramische Schutzschicht in einem alkalischen Ultraschallbad entfernt wird.

15. Verwendung von polymerbasierten Keramikmaterialien zum Schutz von nicht zu reinigenden Oberflächenabschnitten (8) vor Fluoridionen bei einem Reinigungsprozess für Oberflächen.

16. Verwendung nach Anspruch 15,
**dadurch gekennzeichnet, dass**
ein siliziumhaltiges polymerbasiertes Keramikmaterial als Beschichtungsmaterial benutzt wird.

17. Verwendung nach Anspruch 16,
**dadurch gekennzeichnet, dass**
das polymerbasierte Keramikmaterial SiC und/oder Si₃N₄ bildende Precursor umfasst.

18. Verwendung nach Anspruch 17,
**dadurch gekennzeichnet, dass**
das polymerbasierte Keramikmaterial Polysilan, Polycarbosilan, Polysilazan, Polyborosilazan oder Polycarbosilazan als Precursor umfasst.
